# EUROPEAN PATENT APPLICATION

(11) **EP 4 057 698 A1**
(43) Date of publication of application: **14.09.2022**
(21) Application number: 21305273.1
(22) Date of filing: 08.03.2021
(51) Int. Cl.: H04W 40/00, H04W 40/02, H04W 40/28, H04W 88/02

(54) **METHODS FOR ROUTING WAKE-UP SIGNALS IN A NETWORK AND ASSOCIATED SYSTEM**

(71) Applicant: Université de Strasbourg, 67081 Strasbourg (FR); Centre National de la Recherche Scientifique, 75794 Paris Cedex 16 (FR)
(72) Inventor: SAMPAYO, Sebastian Lucas, 67000 Strasbourg (FR); MONTAVONT, Julien, 67700 Ottersthal (FR); NOEL, Thomas, 67230 Westhouse (FR)
(74) Representative: Cabinet Camus Lebkiri

(57) **Abstract**

The invention relates to a method for routing wake-up signals, the method comprising the steps of:
- Receiving, by a device, a wake-up signal comprising a destination address and a hop counter,
- Modifying the value of the hop counter,
- if the destination address does not match the address of the device and if the value of the hop counter is not equal to a predetermined hop value:
- sending the wake-up signal to the neighbour devices,

- if the destination address matches the address of the device:
- awakening the main radio,

- if the value of the hop counter is equal to a predetermined hop value:
- dropping the wake-up signal,

wherein the device does not manage wake-up signals while a predetermined rule is not verified.

## Description

### TECHNICAL FIELD

The technical field of the invention is the field of telecommunications.

The present document concerns methods for routing wake-up signals in a etwork an/d in particular a reactive method which uses flooding to reach a node to be awaken. The invention also concerns a hybrid method comprising a proactive method to define areas of the network and said reactive method.

### STATE OF THE ART

Reducing energy consumption is of paramount importance in Internet of Thing (loT) networks. Such networks are providing new ways to connect physical entities from the environment to existing networks, involving resources-constrained devices which have to communicate with one another to transmit data, for example sensor data. Resources-constrained devices used in loT networks have limited power supply as they use batteries. The main challenge in these applications is to extend the battery lifetime as much as possible, which translates into minimizing the power consumption while keeping good quality network performance. In such systems, the wireless communication module is typically the most power-consuming one. Therefore, solutions have to be proposed to transmit data using devices with limited power supply.

Traditional solutions to this challenge have used a duty-cycle approach at the medium access control layer (MAC) of the communication stack trading off latency for energy efficiency. This way, the node is only able to communicate in a short active period, while most of the time the transceiver is in sleep mode. The communication with such devices can be achieved synchronously, by coordinating the transmission and reception timeslots for each node, or asynchronously, where the nodes do not agree on any special schedule. Synchronous MAC protocols have proven to be very efficient in high traffic scenarios and stable networks, see for example *[*T. Watteyne, J. Weiss, L. Doherty, and J. Simon. "Industrial IEEE802.15.4e networks: Performance and trade-offs". In: 2015 IEEE International Conference on Communications (ICC). June 2015, pp. 604-609. doi: 10.1109/ICC.2015.7248388*].* However, in many applications, such as Wireless Sensor Networks (WSN), the traffic load is low and the network is dynamic. In those cases, the synchronous protocols present a lot of overhead and their implementations, deployments, and operations remain difficult. Asynchronous MAC protocols are better suited for those applications because they do not keep track of any schedule and make no assumptions about the network. As a consequence, the device has to check the channel periodically introducing idle listening (when there is no other node that needs to communicate) or overhearing (when the device is not the intended destination of the communication) phenomena that can significantly impact the battery consumption. Additionally, collisions and protocol control overhead waste energy in transmissions that are wanted to be reduced as much as possible. Finally, the duration of the active period results in a tradeoff between latency and energy efficiency in these types of solutions, because of the limited time to communicate in each cycle.

Recently, Wake-up Radios (WuR) technology has advanced as a new solution to extend the network lifetime in WSN, see *[*R. Piyare, A. L. Murphy, C. Kiraly, P. Tosato, and D. Brunelli. "Ultra Low Power Wake-Up Radios: A Hardware and Networking Survey". In: IEEE Communications Surveys Tutorials 19.4 (2017), pp. 2117-2157*.].* Its ultra-low power consumption and always-on feature overcome the problems of traditional duty-cycled asynchronous MAC protocols.

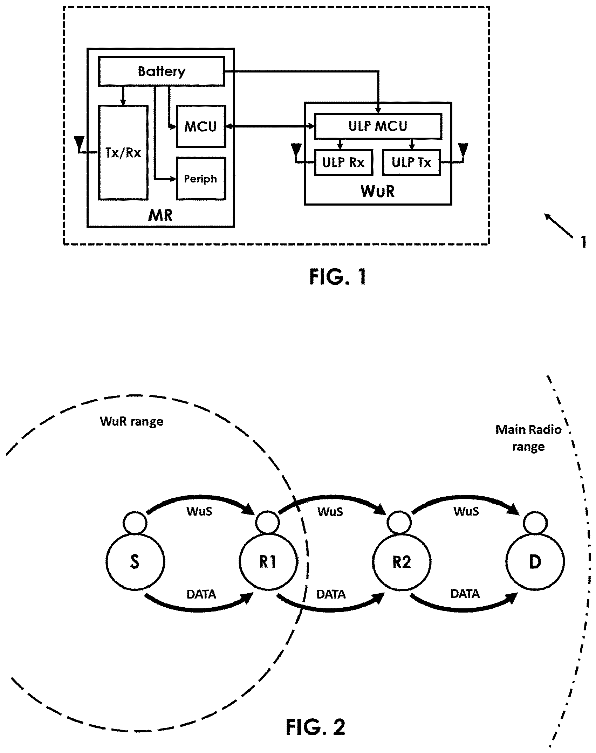

Figure 1 shows a schematic representation of a resources-constrained device 1 comprising a main radio MR and a wake-up radio WuR. The WuR of Figure 1 comprises an ultra-low power (ULP) microcontroller (MCU), an ultra-low power receiver ULP Rx, and an ultra-low power transceiver ULP Tx. The main radio MR comprises a battery, a microcontroller MCU, a transmitter/receiver Tx/Rx, and peripheral components Periph such as sensors. The WuR is a secondary receiver that listens to the channel continuously while the main transceiver Tx/Rx stays asleep. When a resources-constrained device wants to communicate a data packet, it first sends a wake-up signal (a packet on the WuR channel) using its wake-up radio WuR towards the destination. Upon reception, the destination wakes up the main radio MR and waits in listening mode for the data packet. After exchanging data and acknowledgment, the destination puts back its main radio MR into sleep mode to save energy. This technology is revolutionary because it promises the end of the idle listening and overhearing at the MAC layer of asynchronous protocols, and no more precise synchronized algorithms.

One of the main limitations of WuR is a low sensitivity, which translates into a range mismatch between the main radio (long or medium range, in the order of 200 m) and the WuR (short-range, around 20 m). This is represented at Figure 2, showing the range of the wake-up radio WuR of the sending node S, the WuR range being too short to reach the wake-up radio of the destination node D, and the main radio range of the main radio of the sending node S, which is long enough to reach the main radio of the destination node D. Consequently, the use of WuR leads to very dense networks, because the nodes must be close to each other, to communicate through the very short range of WuR. This also results in situations in which two nodes can communicate together with the main radio, but not with WuR. In such situations, a node cannot wake up its destination and therefore communicate with that node while they are in range regarding the main radio. Using the simplest approach, W-MAC (see *[*Rajeev Piyare, Timofei Istomin, and Amy L. Murphy. "WaCo: A Wake-Up Radio COOJA Extension for Simulating Ultra Low Power Radios". In: EWSN. 2017*.]*), the resulting range of the system is upper bounded by the WuR range. That means that the source node S may need to relay a data packet over intermediate hops R1 and R2 to reach its final destination D, as depicted in Figure 2, even when source S and destination D could communicate at only one hop on the main radio, according to its range.

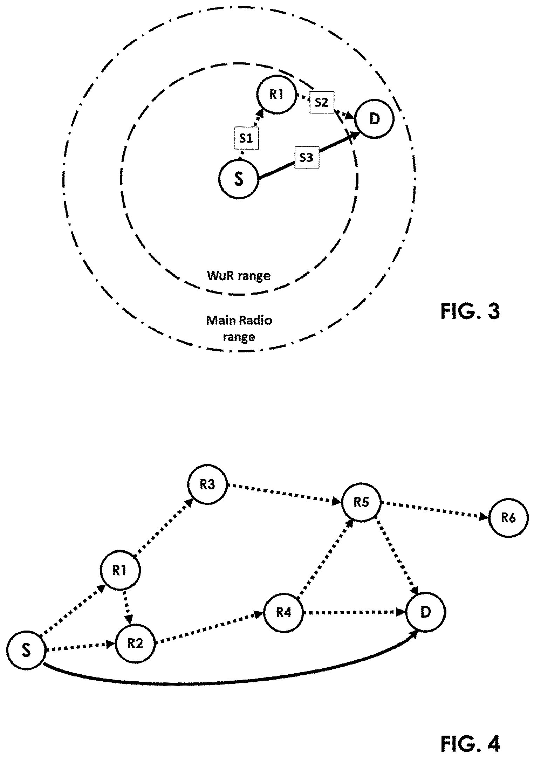

To overcome this problem, one way is to increase the output power of the WuR transmitter to compensate for the low sensitivity. However, this results in huge power consumption that cancels the benefits of the WuR. Another option is to deal with the range mismatch by routing the WuS through intermediate nodes to wake up the destination and then transmit the data packet directly in a single hop on the main radio. This is represented at Figure 3, where the source node S is trying to send data to a destination node D. The source node S first sends a wake-up signal in a step 1 to the relay node R1, which relays the wake-up signal to the destination node D in a step 2. When the main radio of the destination node D is awaken, the source node S sends the data signal on the main radio channel directly to the destination node D in a step 3. The destination node D may reply with an acknowledgment frame on the main radio (not represented).

This means that the nodes need to find routes on the WuR topology to communicate with some of their main radio neighbours. This is what is understood by "wake-up signal routing" or the "routing layer" in wake-up radios. For this reason, strategies are needed to route the wake-up signal on the WuR topology. It is a hard challenge to find the shortest path in such scenarios because both topologies have to be taken into account. Then, problems of calculating the sync delay and the fact that the size of the wake-up signal has to be limited because of the low data rate are encountered. To solve the problems encountered while routing wake-up signals, proactive or reactive protocols can be used.

In proactive protocols, the nodes build a routing structure as soon as they are initialized, even if there is no data to send. Then, the nodes should maintain their routing structure throughout the network lifetime. W-MAC has been proven to work along with the Routing Protocol for Low- Power and Lossy Networks (RPL). RPL is the Internet Engineering Task Force (IETF) standard for multi-hop routing in WSN. This proactive protocol builds a destination-oriented directed acyclic graph based on distance vectors, and each node selects a preferred parent when joining the network. While W-MAC achieves a great power efficiency, latency, and reliability compared to the duty-cycled approach, it does not fix the main problems of RPL, such as inefficient parent selection and slow recovery time after a preferred parent dies.

On the other hand, in reactive protocols, the nodes only search for paths as soon as a data packet is generated. LOADng (see *[*T. Clausen, J. Yi, U. Herberg, Lightweight On-demand Ad hoc Distance-vector Routing - Next Generation (LOADng): Protocol, extension, and applicability, Computer Networks 126 (2017) 125-140. doi:10.1016/j.comnet.2017.06.025*]*) is an example of this approach, where the nodes request routes by flooding the network. Then, the nodes keep a routing table with the recent destinations for a certain amount of time. However, the main concern about reactive protocols is the path discovery process for new or broken routes, which could potentially incur additional delay, additional control signalling, and data retransmissions.

There is therefore a need for a wake-up signals routing protocol that addresses the drawbacks mentioned before, and particularly the range mismatch between the main radio and the wake-up radio in a network of resources-constrained device.

### SUMMARY OF THE INVENTION

The present invention solves the above-mentioned problems by providing a solution able to provide multiple paths to reach the destination node and minimum synchronization delay.

According to a first aspect of the invention, this is satisfied by providing a method for routing wake-up signals in at least one network comprising a plurality of devices, each device comprising a wake-up radio and a main radio and having at least one neighbour device, the wake-up radio being able to receive and send wake-up signals over at least one wake-up radio channel and being able to wake-up the main radio, the method being characterized in that it comprises at least the steps of:
- Receiving, by at least one device of the plurality of devices, at least one wake-up signal comprising a destination address and a hop counter,
- Modifying, upon reception of the signal, by the at least one device, the value of the hop counter,
- if the destination address does not match the address of the at least one device and if the value of the hop counter is not equal to a predetermined hop value:
   - sending, by said device, the at least one wake-up signal to the neighbour devices of the at least one device,
- if the destination address matches the address of the at least one device:
   - awakening, by the wake-up radio, the main radio of the at least one device,
- if the value of the hop counter is equal to a predetermined hop value:
   - dropping the wake-up signal,
the method being further characterized in that the at least one device does not manage wake-up signals while a predetermined rule is not verified.

Thanks to the invention, the range mismatch issue between the range of the main radio and the range of the wake-up radio is solved, as the invention permits to reach and wake up the destination node by flooding the network with wake-up signals. Each device receiving a wake-up signal then verifies if the destination address comprised in the wake-up signal received matches its own address to decide to wake-up its main radio or to relay the wake-up signal to its neighbour. Using such a reactive approach allows wake-up signals to take multiple paths to reach the destination, which, in turn, improves reliability by eliminating the single point of failure and the funneling effect, compared to the proactive approach. Therefore, the invention is more robust to different network topologies. As a consequence, the latency is also reduced because of the lower number of retransmissions required to deliver a data packet successfully.

Besides, WuR is very sensitive to interferences and collisions, and the invention mitigates that problem by taking advantage of multiple paths. Secondly, the invention allows to reduce the size of the wake-up signal which contributes to reducing the power consumption. Hence, it minimizes the value of sync delay required to wake up a destination node, which in turn also reduces the latency. Also, the lack of control overhead in the invention is especially important to increase the network lifetime in low traffic applications with wake-up radios.

To avoid infinite flooding and "ping-pong" effects, that is to avoid devices receiving and forwarding wake-up signals infinitely, in the invention the sender of a wake-up signal does not manage received wake-up signals while a predetermined rule is not verified. As the device does not manage received wake-up signals during that time, it does not relay wake-up signals and therefore does not contribute to flooding the network for that duration. Furthermore, in the invention, the wake-up signals comprise a hop counters, to avoid flooding the network in areas far from the source and the destination.

The method for routing wake-up signals according to the invention may also have one or more of the following characteristics, considered individually or according to any technically possible combinations thereof:
- that the at least one device does not manage wake-up signals while the predetermined rule is not verified by either turning its wake-up radio off while the predetermined rule is not verified or by discarding all received wake-up signals while the predetermined rule is not verified,
- the predetermined rule is verified when a predetermined event occurs or when a predetermined timer has lapsed,
- the event is the reception of a main signal or the sending of a wake-up signal,
- a step of clear channel assessment of the wake-up radio channel is carried out prior to sending the at least one wake-up signal,
- the at least one wake-up signal has a maximal length of 10 bits,
- the value of the hop counter is modified by decrementing the value of the hop counter and the predetermined hop value is zero,
- the method for routing wake-up signals in at least one network previously comprises the following steps of building areas of the network:
   - Sending, by at least one first build device of the plurality of devices of the network, at least one area building wake-up signal towards each neighbour of the at least one device, the area building wake-up signal comprising an area identifier corresponding to a first area and a hop counter defining the size of the area, and starting, by said first build device, a build timer,
   - Receiving, by the at least one neighbour device of the first build device, the at least one area building wake-up signal, and, upon receiving the at least one area building wake-up signal, modifying the value of the hop counter and waking-up the main radio of the at least one neighbour device of the first build device,
   - For each neighbour device of the first build device having received an area building wake-up signal at the step of receiving the at least one wake-up signal:
      - if the value of the hop counter is not equal to a predetermined hop value, sending, by said neighbour device, the at least one area building wake-up signal to neighbour devices of the neighbour device,
      - if the value of the hop counter is equal to a predetermined hop value, dropping the area building wake-up signal,
   - And, after expiry of the build timer:
      - Sending, by the at least one first build device, at least one area building main signal using its main radio towards the neighbours of the at least one first build device, the area building main signal comprising an area identifier corresponding to a first area,
      - Receiving, by the at least one neighbour device of the at least one first build device, the at least one area building main signal, and, upon receiving the at least one area building main signal, assigning to itself an area identifier corresponding to a second area, computed by modifying the area identifier received in the area building main signal based on a predetermined area identifier value.
- each neighbour device, after assigning to itself an area identifier, sends a discovery wake-up signal towards neighbour devices of the neighbour device and, based on at least one received reply to the discovery wake-up signal, the at least one received reply comprising the area identifier of the sender of the reply, assigns to itself a role being chosen from:
   - legacy node if the at least one received reply comprises the same area identifier as the area identifier of the sender of the discovery wake-up signal or
   - border router node if the at least one received reply comprises a different area identifier from the area identifier of the sender of the discovery wake-up signal.

Another aspect of the invention relates to a system comprising a plurality of devices, the plurality of devices being comprised in at least one network, each device comprising a wake-up radio and a main radio and having at least one neighbour device, the wake-up radio being able to receive and send wake-up signals over at least one wake-up radio channel and to wake-up the main radio, each device of the plurality of devices being configured to carry out the steps of the method for routing wake-up signals according to the invention.

The system according to the invention may also have one or more of the following characteristics, considered individually or according to any technically possible combinations thereof:
- the devices are resources-constrained devices,
- the at least one network is divided in areas formed using the method for routing wake-up signals according to the invention, wherein each device of the network is assigned to an area and each wake-up signal comprises an area identifier of the area assigned to the sender of the wake-up signal.

Another aspect of the invention relates to a computer program product comprising instructions which, when the program is executed by a computer, causes the computer to carry out the method according to the invention.

Another aspect of the invention relates to a computer-readable medium comprising instructions which, when executed by a computer, cause the computer to carry out the method according to the invention.

The invention finds a particular interest in wireless sensor networks, where data acquired by sensors on physical objects have to be routed towards networks such as the internet.

### BRIEF DESCRIPTION OF THE FIGURES

Other characteristics and advantages of the invention will become clear from the description that is given thereof below, by way of indication and in no way limiting, with reference to the appended figures, among which:
- Figure 1 is a schematic representation of a device comprising a wake-up radio of the state of the art,
- Figure 2 is a schematic representation of a wireless sensor network showing the range mismatch issue and a routing method of the state of the art,
- Figure 3 is a schematic representation of a routing method of the state of the art,
- Figure 4 is a schematic representation of a system to carry out the methods of the invention,
- Figure 5 is a schematic representation of a first embodiment of a method for routing wake-up signals according to the invention,
- Figure 6 is a schematic representation of a second embodiment of a method for routing wake-up signals according to the invention,
- Figure 7 is a schematic representation of a network divided in areas using the second embodiment of the routing method according to the invention.

### DETAILED DESCRIPTION

For greater clarity, identical or similar elements are marked by identical reference signs in all of the figures.

The figures are provided for information purposes only and are in no way limiting the invention to their disclosure.

Figure 4 presents the system configured to carry out the method for routing wake-up signals according to the invention.

The system represented at Figure 4 comprises a plurality of devices, preferably resources-constrained devices, the plurality of devices being comprised in a network. The devices are referred to by "S" for source device, "R" for relay devices, and "D" for destination device.

Each device of the plurality of devices represented at Figure 4 comprises a wake-up radio and a main radio as presented at Figure 1 and has at least one neighbour device. It is understood by "neighbour device" a device reachable by using the wake-up radio. As explained in the state of the art, the wake-up radio of each device is able to receive and send wake-up signals over at least one wake-up radio channel and to wake-up the main radio of the device.

It is understood by "resources-constrained" device a device having limited power supply, such as batteries. Preferably, resources-constrained devices are small devices, for example less than 20cm on each side, and have batteries that fit their form factor. Can be comprised in "resources-constrained" devices, devices that have limited processing capacities, such as microprocessors usually used in sensor devices or in other loT devices.

In the system of Figure 4, the wake-up signals to communicate between wake-up radios are represented in dotted arrows, while the main signal to communicate between main radios is represented in a plain arrow. The main signal is sent after one wake-up signal has reached the destination device D, so that the main radio destination device D is awake when the main radio of the source device S sends a main signal using its main radio.

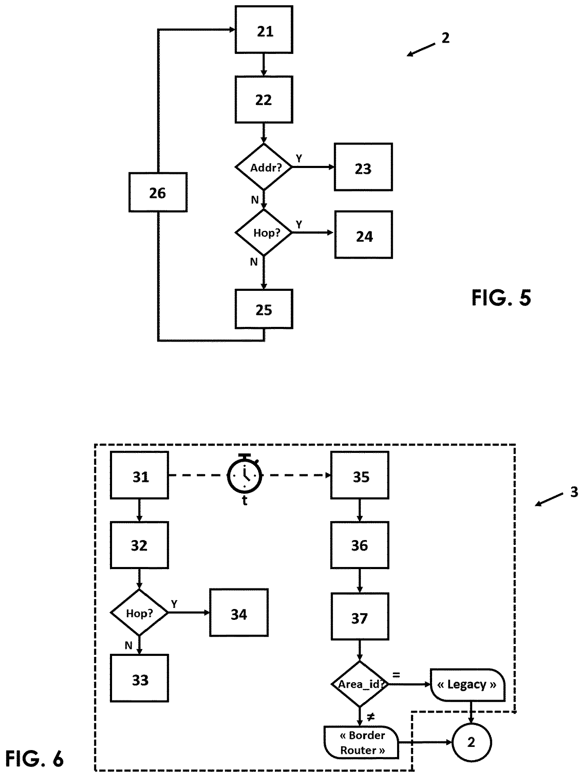

Figure 5 shows a schematic representation of a first embodiment of the method of routing wake-up signals in a network of the invention.

In this first embodiment, the method of the invention permits a flood of the network that is not infinite nor too extended, that is avoiding reaching devices that are too far from the destination device D. The method permits to wake-up only the main radio of the destination device D with increased lifetime of the network by having lower power consumption compared to the state of the art, while keeping good performance.

The method 2 represented at Figure 5 comprises six steps and two tests. The method 2 is carried out by each relay device R1 to R6 and by the destination device D of the system of Figure 4. The source device S does not carry out the method 2 as the source device S generates the wake-up signal comprising the destination address and the hop counter. Therefore, the source device S does not receive wake-up signals and does not carry out the tests of the method 2. The source device S is nevertheless covered by the present invention.

In a first step 21 of the method, a device of the network receives at least one wake-up signal comprising a destination address and a hop counter. This is done by the wake-up radio of the receiving device using its ultra-low power receiver module ULP Rx. The wake-up signal can have a maximal length of 10 bits, to have better performance as the wake-up radios have low data rates. This limited size of the wake-up signal adds a constraint on the size of the network. The reception follows an emission of this wake-up signal by another device. This other device can be another relay device or the source device S, as long as the emitter is a neighbour of the receiving device. For example, when R2 carries out the method 2, R2 can receive wake-up signals from either the source device S or the relay device R1. What defines roles in the network only depends on the data to be transmitted. That is, a device can be a source device for one piece of data to be transmitted and later a relay device or a destination device for another piece of data to be transmitted, depending on where the data has to be sent.

The destination address is an address of the destination device, or any piece of data that permits to identify the destination device D. The addresses are preferably described with 8 bits, as in the WuR literature, so as to address up to 255 devices. The address size can be extended or limited to include or remove devices. The destination address comprised in the wake-up signal can be compared by a receiving device to the receiving device's own address. This permits to only wake up the main radio of the destination device D.

The hop counter permits to count the number of hops, that is the number of transmissions of said wake-up signal. The hop counter can be described with 2 bits, depending on the size of the network. The hop counter preferably starts at its maximum value, that is when the source device S generates the wake-up signal comprising the hop counter. The hop counter is then decreased with each transmission. The hop counter can take any other embodiment, that is starting from zero and increasing with each transmission, or any other embodiment that permits to drop a wake-up signal when it has been transmitted a predetermined number of times. The hop counter permits to limit extended flooding, so as not to reach devices that are too far from the destination device D, as will be seen later.

The second step of the method 2 is a step 22 of modifying, upon reception of the signal, the value of the hop counter. This modification can be an addition, a subtraction or any other modification on the value or on the content of the hop counter field. The modification is carried out by the receiving device on the received wake-up signal or on a copy of the received wake-up signal made by the receiving device or locally in the receiving device by storing a copy of the received value of the hop counter and modifying said value. The modification of the hop counter is for example and preferably a subtraction of the hop counter by "1" so as to ultimately reach "0" when the wake-up signal has been transmitted for the predefined number of times, that is a number equal to the initial value of the hop counter. The invention covers any embodiment of hop counter enabling to count the number of transmissions of a wake-up signal and any modification made to said hop counter.

The receiving device then carries out two tests, in any order.

One of the two tests is to verify if the destination address matches the address of the neighbour device. This test comprises the comparison of the received address comprised in the wake-up signal and the address of the receiving device. If the destination address permits to identify the receiving device as the destination device, the receiving device knows that it is the destination device D and then awakes its main radio in a step 23.

Another test is to verify if the value of the hop counter is equal to a predetermined hop value. As previously explained, the predetermined hop value permits to define a number of transmissions of the wake-up signal so as to avoid extended flooding. For example, the predetermined hop value can be set to "0" with the hop counter starting at the maximum number of hops allowed, for example 4 in the example of Figure 4. The predetermined hop value can also be set to the maximum number of hops allowed and the hop counter increased at each transmission up to reaching the predetermined hop value. If the hop counter comprised in the wake-up signal is equal to the predetermined hop value, the wake-up signal is dropped in a step 24, that is the wake-up signal will not be relayed by the receiving device to its neighbours. Indeed, the hop counter being equal to the predetermined hop value means that the wake-up signal has been transmitted the maximum number of times, therefore the wake-up signal should not be relayed anymore.

If the destination address does not match the address of the receiving device and if the value of the hop counter is not equal to the predetermined hop value, the receiving device relays the wake-up signal to its neighbours, continuing the flooding of the network. When both tests are negative, represented by a "N" at Figure 5, the receiving device sends at a step 25 the at least one wake-up signal to its neighbours. Before sending a wake-up signal, the method 2 can comprise a step of clear channel assessment of the wake-up radio channel (not represented).

After having sent a wake-up signal at step 25, in a step 26 the device does not manage wake-up signals while a predetermined rule is not verified.

It is understood by "the device does not manage wake-up signals" the fact that the device does not receive wake-up signals or does not process received wake-up signals. That is, the device can stop managing wake-up signals by either turning its wake-up radio off or by discarding all received wake-up signals, for example by not processing the received wake-up signals using the method 2.

It is understood by "while a predetermined rule is not verified" the fact that the device only starts managing wake-up signals when the predetermined rule is verified. Rules can include but are not limited to the occurrence of a predetermined event or the lapsing of a predetermined timer. For example, predetermined event can include but are not limited to the reception of a main signal or the sending of a wake-up signal.

The step 26 permits to avoid infinite flooding, that is for example to avoid a device receiving and relaying the same wake-up signal he just relayed to its neighbours.

Figure 6 shows a schematic representation of another embodiment of a method of routing wake-up signals in a network. In this other embodiment, the method 2 of Figure 5 comprises several steps prior to its execution. This is represented at Figure 6, where the method 3 comprises several steps before carrying out the steps of the method 2. The other embodiment of the routing method comprises both methods 3 and 2.

The method 3 is a method of building areas of the network. Building areas of the network permits to assign roles to the different devices and to enhance the performance of the routing of wake-up signals. When area are built and devices are assigned a role, the method 2 is then carried out as described previously.

The method 3 first comprises a step 31 of sending, by at least one first build device of the plurality of devices of the network, at least one area building wake-up signal towards each neighbour of the at least one device. A "first build device" is any device that first sends an area building wake-up signal to define areas of the network. It can be the same device as the source device S of Figure 4.

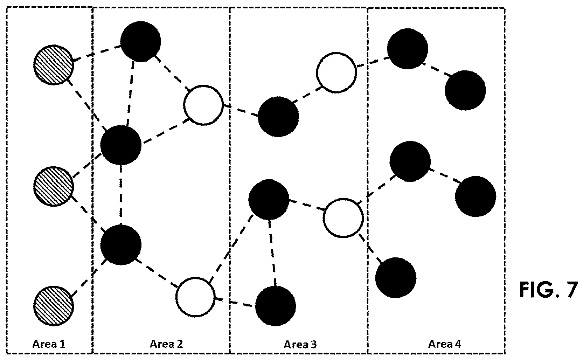

The area building wake-up signal comprises an area identifier corresponding to a first area and a hop counter defining the size of the area. Areas of a network are represented at Figure 7, which is a schematic representation of a network comprising resources-constrained devices divided in areas according to the invention. Therefore, when it is mentioned an area identifier corresponding to a first area, it is for example the number "1" corresponding to area 1. The area identifier is used so that only the devices in higher areas (or with unassigned area identifiers) wake up their main radio. First build devices are shown as striped circles at Figure 7. The hop counter permits to define the size of the areas of the network as explained later.

The method 3 then comprises a step of starting, by said first build device, a build timer t as represented at Figure 6. The build timer t can for example be computed by multiplying the number of hops with the mean duration of one hop. The mean duration of one hop can for example be computed by adding the mean duration of the clear channel assessment and the mean time required to process the wake-up signal and forward it. Mean durations and times can be obtained by doing experiments prior to the deployment or by learning from the network use over time.

The method 3 further comprises a step 32 of receiving, by the neighbour devices of the first build device, the area building wake-up signal, and, upon receiving the at least one area building wake-up signal, modifying the value of the hop counter and waking-up the main radio of the at least one neighbour device of the first build device. The hop counter works as in method 2 presented previously, and modifying it also works as explained previously for method 2. The main radios of any device receiving the wake-up signal are awaken for use later in the method.

Then, the method 3 comprises a test, carried out by each neighbour having received the wake-up signal. This test comprises comparing the value of the hop counter to a predetermined hop value. This works as presented previously in method 2, except for the fact that the predetermined hop value is set so as to define the size of areas of the network. That, is, for example the predetermined hop value can be set to two to define areas having devices two hops away from each other. If the value of the hop counter is not equal to the predetermined hop value, the method 3 comprises a step 33 of sending, by the receiving neighbour devices, the area building wake-up signal to its neighbour devices, that is to the neighbour devices of the neighbour device of the first build device.

If the value of the hop counter is equal to the predetermined hop value, the receiving device drops the area building wake-up signal in a step 34, that is it does not relay said wake-up signal to its neighbour.

This first part of the method 3 permits to wake-up only the main radios of the devices of the future area.

The method 3 comprises further steps of assigning a new area identifier to all devices having their main radio awoke, that is steps for creating an area. These steps are carried out after expiry of the build timer started by the first build device.

A first step 35 is a step of sending, by the first build device, at least one area building main signal using its main radio towards its neighbours. The area building main signal comprises the area identifier corresponding to a first area mentioned before. For example, for building area 2 at Figure 7, the area building main signal comprises an identifier of the first area Area 1. Such an identifier can be the number of the area but can be any other mean to identify the first area or the future area.

A second step 36 is a step of receiving, by the neighbour devices of the first build device, the area building main signal, and, upon receiving the area building main signal, assigning to itself an area identifier corresponding to a second area, computed by modifying the area identifier received in the area building main signal based on a predetermined area identifier value. For example, this can comprise receiving an identifier corresponding to area 1, for example the number 1 in bits, and adding 1, 1 being the predetermined area identifier value, therefore assigning to itself an identifier corresponding to Area 2. This permits to create Area 2, as all devices having their main radio awoke will assign themselves an identifier corresponding to Area 2.

Building areas permits for devices to find a path through intermediate devices to deliver main radio data packets towards the network gateways using a minimum number of relay nodes for relaying the main radio data packet.

The method 3 further comprises steps to assign each device a role in its area.

In a first step 37, each device, after assigning to itself an area identifier, sends a discovery wake-up signal towards its neighbours. Still in step 37, it receives replies from its neighbours, that is for example acknowledgement signals. These acknowledgement signals comprise the area identifier of the neighbour replying. Based on the received replies to the discovery wake-up signal, the device assigns itself a role being chosen from:
- "legacy node" if all the received replies comprise the same area identifier as the area identifier of the sender of the discovery wake-up signal or
- "border router node" if at least one of the received replies comprises a different area identifier from the area identifier of the sender of the discovery wake-up signal.

The legacy nodes (in plain circles at Figure 7) only transmit their data, generate and relay wake-up signals of method 1. Area border routers (in empty circles at Figure 7) generate the same traffic type as legacy node. In addition, area border routers can relay data transmitted over main radios from legacy nodes. Finally, network gateways (in striped circles at Figure 7) are responsible to forward the traffic generated by the network to the Internet, and are preferably first build devices. Assigning roles to devices permits to reduce the number of devices capable of relaying main radio data packets and/or generating building signals. Furthermore, legacy nodes could decide whether to wake up a single area border router or multiple ones, in order to adjust the network performance..

The invention, even though not represented in the Figures, can also cover the sending of the main radio signal between the main radio of the source device S and the destination device D, when the destination device D has been awaken using any of the methods according to the invention. The main signal is sent by the source device S after a synchronization timer t_sync has elapsed. T_sync can for example be computed by multiplying the number of hops with the mean duration of one hop. The mean duration of one hop can for example be computed by adding the mean duration of the clear channel assessment and the mean time required to process the wake-up signal and forward it. Mean durations and times can be obtained by doing experiments prior to the deployment or by learning from the network use over time. Another way to transmit the main signal is for the source device S to listen to main signals using its main radio. When the destination D is awaken by a wake-up signal reaching it, the destination device D sends an acknowledgement main signal to the source device S, so that the source device S knows that the destination device D is available to receive main signals and can send data using its main radio to the destination device D. This permits to reduce the idle listening time, by moving it from the destination device D to the source device S. Again another way to achieve this is to let the source device S predict the duration of the synchronization delay. Then, it can keep the main radio in sleep until the predicted synchronization delay is over, and wake up immediately before the acknowledgement main signal is received. The prediction of the synchronization delay can be done using an estimation based on previous packets, such as a moving average of the latency measured at the source device S.

## Claims

1. Method for routing wake-up signals in at least one network comprising a plurality of devices, each device comprising a wake-up radio and a main radio and having at least one neighbour device, the wake-up radio being able to receive and send wake-up signals over at least one wake-up radio channel and being able to wake-up the main radio, the method being **characterized in that** it comprises at least the steps of:
- Receiving, by at least one device of the plurality of devices, at least one wake-up signal comprising a destination address and a hop counter,
- Modifying, upon reception of the signal, by the at least one device, the value of the hop counter,
- if the destination address does not match the address of the at least one device and if the value of the hop counter is not equal to a predetermined hop value:
- sending, by said device, the at least one wake-up signal to the neighbour devices of the at least one device,
- if the destination address matches the address of the at least one device:
- awakening, by the wake-up radio, the main radio of the at least one device,
- if the value of the hop counter is equal to a predetermined hop value:
- dropping the wake-up signal,
the method being further **characterized in that** the at least one device does not manage wake-up signals while a predetermined rule is not verified.

2. Method for routing wake-up signals in at least one network according to any of the preceding claims **characterized in that** the at least one device does not manage wake-up signals while the predetermined rule is not verified by either turning its wake-up radio off while the predetermined rule is not verified or by discarding all received wake-up signals while the predetermined rule is not verified.

3. Method for routing wake-up signals in at least one network according to the preceding claim **characterized in that** the predetermined rule is verified when a predetermined event occurs or when a predetermined timer has lapsed.

4. Method for routing wake-up signals in at least one network according to the preceding claim **characterized in that** the event is the reception of a main signal or the sending of a wake-up signal.

5. Method for routing wake-up signals in at least one network according to any of the preceding claims **characterized in that** a step of clear channel assessment of the wake-up radio channel is carried out prior to sending the at least one wake-up signal.

6. Method for routing wake-up signals in at least one network according to any of the preceding claims **characterized in that** the at least one wake-up signal has a maximal length of 10 bits.

7. Method for routing wake-up signals in at least one network according to any of the preceding claims **characterized in that** the value of the hop counter is modified by decrementing the value of the hop counter and **in that** the predetermined hop value is zero.

8. Method for routing wake-up signals in at least one network according to any of the preceding claims **characterized in that** it previously comprises the following steps of building areas of the network:
- Sending, by at least one first build device of the plurality of devices of the network, at least one area building wake-up signal towards each neighbour of the at least one device, the area building wake-up signal comprising an area identifier corresponding to a first area and a hop counter defining the size of the area, and starting, by said first build device, a build timer,
- Receiving, by the at least one neighbour device of the first build device, the at least one area building wake-up signal, and, upon receiving the at least one area building wake-up signal, modifying the value of the hop counter and waking-up the main radio of the at least one neighbour device of the first build device,
- For each neighbour device of the first build device having received an area building wake-up signal at the step of receiving the at least one wake-up signal:
- if the value of the hop counter is not equal to a predetermined hop value, sending, by said neighbour device, the at least one area building wake-up signal to neighbour devices of the neighbour device,
- if the value of the hop counter is equal to a predetermined hop value, dropping the area building wake-up signal,
And, after expiry of the build timer:
- Sending, by the at least one first build device, at least one area building main signal using its main radio towards the neighbours of the at least one first build device, the area building main signal comprising an area identifier corresponding to a first area,
- Receiving, by the at least one neighbour device of the at least one first build device, the at least one area building main signal, and, upon receiving the at least one area building main signal, assigning to itself an area identifier corresponding to a second area, computed by modifying the area identifier received in the area building main signal based on a predetermined area identifier value.

9. Method for routing wake-up signals in at least one network according to the preceding claim **characterized in that** each neighbour device, after assigning to itself an area identifier, sends a discovery wake-up signal towards neighbour devices of the neighbour device and, based on at least one received reply to the discovery wake-up signal, the at least one received reply comprising the area identifier of the sender of the reply, assigns to itself a role being chosen from:
- legacy node if the at least one received reply comprises the same area identifier as the area identifier of the sender of the discovery wake-up signal or
- border router node if the at least one received reply comprises a different area identifier from the area identifier of the sender of the discovery wake-up signal.

10. System comprising a plurality of devices, the plurality of devices being comprised in at least one network, each device comprising a wake-up radio and a main radio and having at least one neighbour device, the wake-up radio being able to receive and send wake-up signals over at least one wake-up radio channel and to wake-up the main radio, each device of the plurality of devices being configured to carry out the steps of the method for routing wake-up signals according to any of the preceding claims.

11. System according to the preceding claim **characterized in that** the devices are resources-constrained devices.

12. System according to any of claims 10 or 11 **characterized in that** the at least one network is divided in areas formed using the method for routing wake-up signals according to any of claims 8 or 9, wherein each device of the network is assigned to an area and each wake-up signal comprises an area identifier of the area assigned to the sender of the wake-up signal.

13. Computer program product comprising instructions which, when the program is executed by a computer, causes the computer to carry out the method for routing wake-up signals according to any one of claims 1 to 9.

14. Computer-readable medium comprising instructions which, when executed by a computer, cause the computer to carry out the method for routing wake-up signals according to any one of claims 1 to 9.
